# EUROPEAN PATENT SPECIFICATION

(11) **EP 2 811 183 B1**
(45) Date of publication and mention of the grant of the patent: **01.03.2017**
(21) Application number: 14171045.9
(22) Date of filing: 03.06.2014
(51) Int. Cl.: F16B 47/00, A47K 5/18

(54) **GRIP FOR SMOOTH SURFACES**
GRIFF FÜR GLATTE OBERFLÄCHEN
POIGNÉE POUR SURFACES LISSES

(30) Priority: 05.06.2013 PL 12211913 U
(43) Date of publication of application: 10.12.2014
(73) Proprietor: Lech, Slawomir, 03-046 Warszawa (PL)
(72) Inventor: Lech, Slawomir, PL 03-161 Warszawa (PL)
(74) Representative: Jedrzejewski, Michal

(56) References cited:
- EP-A1- 1 886 609
- CN-U- 202 096 018
- FR-A1- 2 672 651
- FR-A3- 2 956 802
- GB-A- 2 426 784
- US-A- 3 240 461
- US-A1- 2005 218 278

## Description

The subject of the invention is a grip, which serves to fix things made of wire or plastic to smooth surface such as glass, glazed tiles.

We already know a grip made of a suction cup with a screw embedded in it, a hard overlay in the shape of a dome with a hole and nuts on top. The suction cup contacts the smooth surface, for example glass, a hard, overlay dome is placed on it so that the screw goes through the hole in the overlay. Next the drilled hole in the wire is put on the overlay and tightened with a nut. Tightening the nut makes the screw move outside the overlay and lifts the middle of the suction cup. The lifting force causes a vacuum, which clamps the overlay and so it presses the grip to the smooth surface and, by the same, the fixed object made of a The document US 3 240 461 A shows a prior art suction device.

This solution has a fault, namely the instability of the fixed object in case if we use only one suction cup. The clamped object may rotate towards the overlay, where the suction cup screw is the pivot. It may also deviate from the level in result of a load. Considering all that, in order to achieve the stability of the fixed object it is necessary to have at least two grips.

The invention is a grip in accordance with claim 1. The overlay can have a dome shape In another variant the overlay has a cylinder shape. The suction cup is round and the overlay has a smaller diameter than the suction cup. The nut is cylindrical with a round finishing and a smash (cutting off) in the lower part.

The advantage of the invention is the elimination of the rotation of the pressed object towards the grip and a firmer stabilization of the clamped object made of a wire or plastic by its better stabilization in the vertical and horizontal position and, by the pressing of the nut on the outside surface of the suction cup evoked by the vacuum and assembling the very wire in the dips on the surface of the overlay.When applying the grip based on the invention, in order to achieve a full stability of the fixed object it is necessary to have a smaller number of grips, which makes it much easier and faster to fix the object.

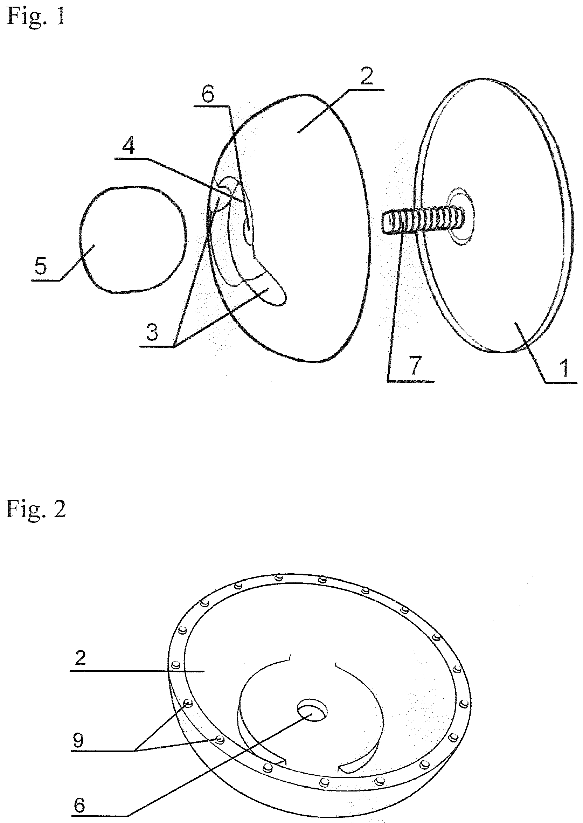

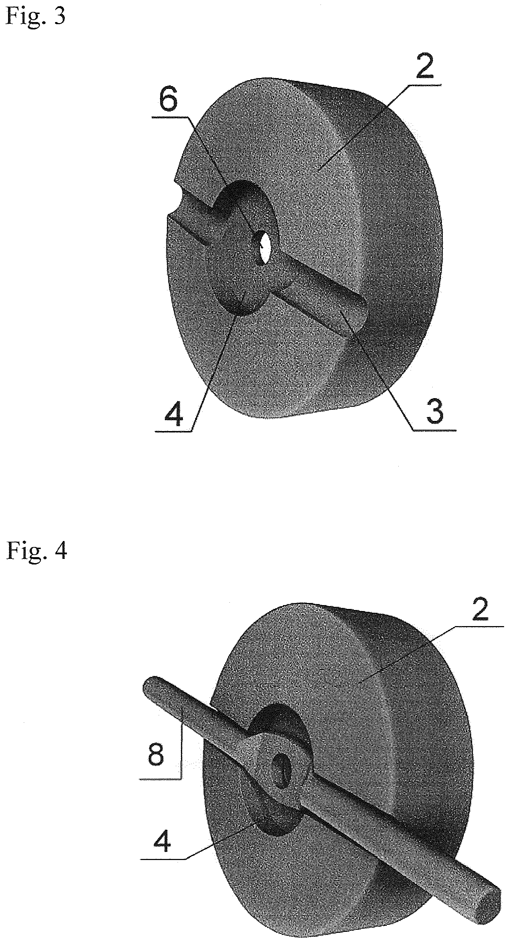

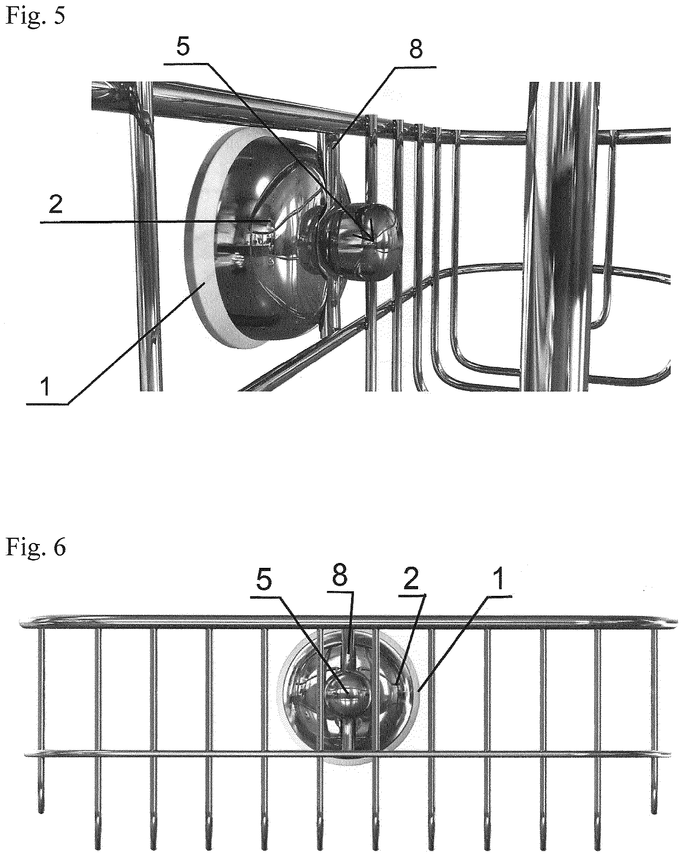

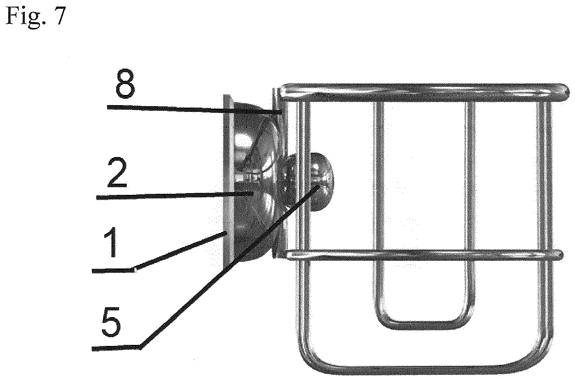

The subject of invention is shown in the drawing, where fig. 1 shows the perspective view of the grip placed on the suction cup, a dome overlay and a nut, fig. 2 presents the perspective view of the same overlay on the side of the suction cup, fig. 3 presents the overlay of another type of grip, where the overlay has a cylindrical shape with an adjusted wire rod of the fixed object, fig 5 presents a piece of the fixed wire basket seen from the front, fig 7 presents the same fixed wire basket seen from the lateral perspective.

The grip, which serves for fixing a wire object, for example a wire bathroom basket to smooth surfaces made of a suction cup 1 of round shape with a hole in the middle with a screw embedded in it 7, a hard overlay 2 with a hole 6 in the middle and a nut 5. The overlay 2 has a round dip 4 on top and a cut 3 of semi-circle section, extending through the center of the centrally located dip 4, on its surface. On an edge of the overlay 2 on the side of the suction cup there are at least two projections 9. The wire rod of the basket 8 fits in the cuts 3 and the dip 4 on the outside surface of the overlay 2. Grip 7 embedded in the suction cup 1 goes through hole 6 in overlay 2 and through the hole in rod 8 of the fixed part. Clamping the nut 5 makes the screw 7 move outside the overlay 2, which causes vacuum under the suction cup 1 and the rod of the fixed part 8 is pressed to overlay 2 and overlay 2 is pressed to the peripheral part of suction cup 1. The projections 9 of the overlay 2 edge on the side of the suction cup stick into the peripheral part of the suction cup and stabilize the overlay and disable its rotation towards the suction cup. Rod 8 of the fixed part fitted in the cuts 3 and dip 4 on the outside surface of overlay 2, pressed to overlay 2 and suction cup 1 is stabilized in all possible directions, namely vertically, horizontally and its rotation is impossible.

## Claims

1. The grip, made of a suction cup with a screw embedded in it, a hard overlay with a hollow surface on the side of the suction cup of round shape with a hole in the middle and a nut, which is **characterized in that** the overlay (2) has a centrally located round dip (4) in its outside surface and one cut (3) of semi-circle section, extending through the center of the centrally located dip (4) and to the periphery of the overlay (2), and on an edge of the overlay (2) on the side of the suction cup there are at least two projections (9).

2. Grip according to claim 1, **wherein** the overlay (2) has a dome shape.

3. Grip according to claim 1, **wherein** the overlay (2) has a cylindrical shape.

4. Grip according to claim 1, or 2 or 3 **wherein** the overlay (2) diameter is smaller than the diameter of the suction cup (1)

5. Grip according to claim 1, or 2 or 3 or 4 **wherein** the nut (5) has a cylindrical shape with round finishing and cutting off in the lower part.

## Patentansprüche

1. Der Griff, hergestellt aus einem Saugnapf mit der darin eingebauten Schraube und einer harten Kappe, die sich durch einen leeren Spielraum seitens des Saugnapfes mit einer runden Form kennzeichnet - dieser Saugnapf verfügt über eine Öffnung im mittleren Teil und eine Mutter-**charakteristisch dadurch,** dass die Kappe (2) eine mittige Anordnung, gerundete Vertiefung (4) auf der Außenfläche der Kappe und einen Ausschnitt (3) mit einem halbkreisförmigen Querschnitt hat, der durch die Mitte der zentral angeordneten Vertiefung (4) und in Richtung des Umfangs der Kappe (2) verläuft und auf dem Rand der Kappe (2), seitens des Saugnapfes, befinden sich mindestens zwei Einlässe (9).

2. Griff nach Vorbehalt 1, **dadurch gekennzeichnet, dass** die Kappe (2) eine Kuppelform aufweist.

3. Griff nach Vorbehalt 2, **dadurch gekennzeichnet, dass** die Kappe (2) eine zylindrische Form aufweist.

4. Griff nach Vorbehalt 1 oder Vorbehalt 2 oder Vorbehalt 3, **dadurch gekennzeichnet, dass** der Durchmesser der Kappe (2) kleiner als der Durchmesser des Saugnapfes ist (1).

5. Griff nach Vorbehalt 1 oder Vorbehalt 2 oder Vorbehalt 3 oder Vorbehalt 4 oder Vorbehalt 5 oder Vorbehalt 6, **dadurch gekennzeichnet, dass** die Mutter (5) eine zylindrische Form mit einer abgerundeten Ausfertigung und Ausschnitt im unteren Teil hat.

## Revendications

1. Une manche, consistant d'une venteuse avec une vis incorporée dedans et un embout dur **caractérisé par** un espace du côté de la venteuse ronde, **caractéristique par** le fait que l'embout (2) possède une excavation arrondie qui occupe une position centrale (4) sur la surface extérieure de l'embout et une entaille (3) de section semi-circulaire, passant par le milieu de l'excavation qui occupe la position centrale (4) vers le périmètre de l'embout (2), et au bord de l'embout (2) du côté de la venteuse il y a au moins deux cannelures (9).

2. Une manche selon la réserve 1, **caractéristique par** le fait que l'embout (2) a la forme d'une coupole.

3. Une manche selon la réserve 1, **caractéristique par** le fait que l'embout (2) a une forme cylindrique.

4. Une manche selon la réserve 1 ou réserve 2 ou réserve 3, **caractéristique par** le fait que le diamètre de l'embout (2) est inférieur au diamètre de la venteuse (1).

5. Une manche selon la réserve 1 ou réserve 2 ou réserve 3 ou réserve 4 ou réserve 5 ou réserve 6, **caractéristique par** le fait que l'embout (5) a une forme cylindrique avec une finition arrondie et une entaille dans la partie inférieure.
